# EUROPEAN PATENT APPLICATION

(11) **EP 4 757 161 A1**
(43) Date of publication of application: **10.06.2026**
(21) Application number: 25220649.5
(22) Date of filing: 04.12.2025
(51) Int. Cl.: H02M 7/483, H02M 7/5395

(54) **CARRIER DPWM FOR 3-LEVEL FLYING CAPACITOR CONVERTER WITH CHOICE OF CLAMPING LEVEL FOR MINIMIZATION OF CAPACITOR CURRENTS**

(30) Priority: 06.12.2024 IT 202400027744
(71) Applicant: Nidec ASI S.p.A., 20092 Cinisello Balsamo MI (IT)
(72) Inventor: Granata, Samuele, 20092 Cinisello Balsamo MI (IT); Proverbio, Matteo, 20092 Cinisello Balsamo MI (IT); Vendemia, Enzo, 20092 Cinisello Balsamo MI (IT); Rossi, Roberto, 20092 Cinisello Balsamo MI (IT); Postiglione, Gianluca, 20092 Cinisello Balsamo MI (IT)
(74) Representative: Perani & Partners S.p.A.

(57) **Abstract**

An electric conversion system (1) comprises an electric converter (2), with three phase modules (22), each connected to two input nodes (211, 212) in direct current, and to a single, respective output node (213) in three-phase alternating current. Each phase module (22) comprises controllable switches (23) and a flying capacitor (223). A control system (3) sends logical control signals to the switches (23), generated for the phase modules (22) as a function of three phase modulating signals (Vₘ). The phase modulating signals (Vₘ) are generated using a DPWM technique, adding, to three sinusoidal phase signals (Vₛᵢₙ), a homopolar signal, generated so that, in different intervals, a phase modulating signal (Vₘ) is saturated at a higher or lower end value. In each interval, the modulating signal to be saturated (V_{f}) is selected in such a way as to minimize a combination of the circulating currents (I₂₂₃) in the flying capacitors (223) of the three phase modules (22).

## Description

### Technical field

The present invention is developed in the field of electric power converters, in particular for interfacing a photovoltaic (PV) or battery-equipped (BESS) system with a three-phase network. More in detail, the invention relates to a DPWM (discontinuous pulse width modulation) control technique such as to minimize the stresses in the converter capacitors.

### Prior art

In photovoltaic or BESS generation applications, an electric converter must interface a DC bus in direct current, on the side of the photovoltaic panels or batteries, and a three-phase system such as the electricity grid.

A known example of a converter that represents a good compromise as a number of switches and capacitors is represented by a flying capacitor multilevel topology (or flycap), in particular with three levels of output voltages.

PWM (pulse width modulation) control techniques are known in the art for electric converter switches, adaptable to various types of converters, including the one described. The switches then receive logical control signals, which are given by a sequence of square wave pulses, in which a logic high state and a logic low state alternate. These logical states correspond to the opening and closing of the switches.

The width of these pulses determines how long the current will or will not pass through the switch and during which a certain voltage level is obtained at the output. The pulse width is determined by comparison between a carrier signal, for example saw tooth or triangular wave, with a certain switching period, and a sinusoidal modulating signal, with a certain fundamental period, longer than the switching period.

As known, thanks to this technique, although the output voltage is a sequence of a limited set of discrete voltage levels (for example three voltage levels, maximum, minimum and zero), by applying appropriate filters and/or considering an average of the output signal over appropriate times, the output voltage approximates the sinusoidal waveform of the modulating signal.

As an evolution of the PWM technique, techniques called DPWM, or discontinuous PWM, are also known.

The DPWM technique is usually used to reduce switching losses in switches. In particular, an interval of the fundamental period where the losses are assumed to be maximum is selected, for example an interval where the output phase voltage would be close to the peak of the sinusoid. In such an interval, the sinusoidal modulating signal is altered to saturate, i.e. flatten to a constant value, which is a maximum value or a minimum value. In this interval, the modulating signal no longer intersects the carrier, and therefore the switches controlled by this comparison remain in their active or inactive state for the entire duration of the interval. This reduces the switching losses.

In a three-phase system, it is preferable not to alter the modulating of a single phase, which would also lead to altering the three-phase currents and therefore the operation of the system. Instead, it is known that, if the alteration required for saturation is introduced in all three phases, as a homopolar component, the three-phase currents are not altered with respect to the purely sinusoidal case. Thus, in each interval in which one of the three phase modulating signals is saturated, the modulating signals of the other two phases also deviate from the sinusoidal waveform, albeit without saturating.

To provide the maximum temporal extension to these periods, the saturation intervals have a duration of 60°, so that in a fundamental period (360°) each phase saturates twice, respectively at the maximum value and at the minimum value.

US 7391181 shows an example of DPWM control, where the saturation interval can be changed as a function of power factor.

### Problems of the background art

In the three-level flycap topology, the most expensive component is usually the flying capacitor. The sizing of the capacitor must be such as to ensure that a certain voltage ripple is not exceeded as a function of the rms current circulating therein. It would therefore be desirable to minimize the rms current flowing in the capacitor.

### Summary of the invention

The object of the present invention is to solve the problems of the known art, by limiting the currents in a capacitor of an electric converter, in particular a flying capacitor, and thus allowing a less onerous sizing.

This and other purposes are achieved by an electric conversion system according to any of the accompanying claims.

The invention provides a converter with three phase modules, each provided with a flying capacitor.

A control system generates the logical control signals for the converter switches using a DPWM technique, thus using a homopolar component, obtained through a criterion of minimizing a combination of the circulating currents in the flying capacitors, preferably minimizing the sum of their squares or minimizing the sum of their rms (root mean square) values. The homopolar component leads in each interval to the saturation of one of the three phase modulating signals, making it a flattened modulating signal in the interval.

Then, in each interval, the optimal flattened modulating signal is selected from among the three phase modulating signals, such as the one that achieves, in the interval, the proposed minimization.

This creates saturation intervals that in general can be offset with respect to the peaks that the voltages and sinusoidal currents would have, and can have different durations from each other, thus resulting in final modulating signals significantly different from the modulating signals obtained from the prior art, still with DPWM techniques, but with the sole purpose of reducing switching losses. The saturation intervals and the choices of which phase modulating signal is to be saturated at each time generally vary depending on the phase shift between voltage and current.

The Applicant in particular has noted that the most critical conditions, for the circulation of current in the flying capacitors, occur when the reference phase duty cycle is close to 0.5, i.e. the output phase voltage is close to 0. The control therefore tends to avoid or temporarily restrict mainly the occurrences in which the modulating signal of a phase has a duty cycle close to 0.5 and at the same time the current of that phase is high.

Advantageously, by minimising the currents circulating in the capacitors in each interval, it is possible to reduce the thermal impact of the currents in the flying capacitors, even in the most critical cases in terms of current intensity and phase shift, and therefore it is possible to significantly reduce the sizing of the flying capacitors.

### Brief Description of the figures

For a better understanding of the following detailed description, some embodiments of the invention are illustrated in the accompanying drawings, wherein:

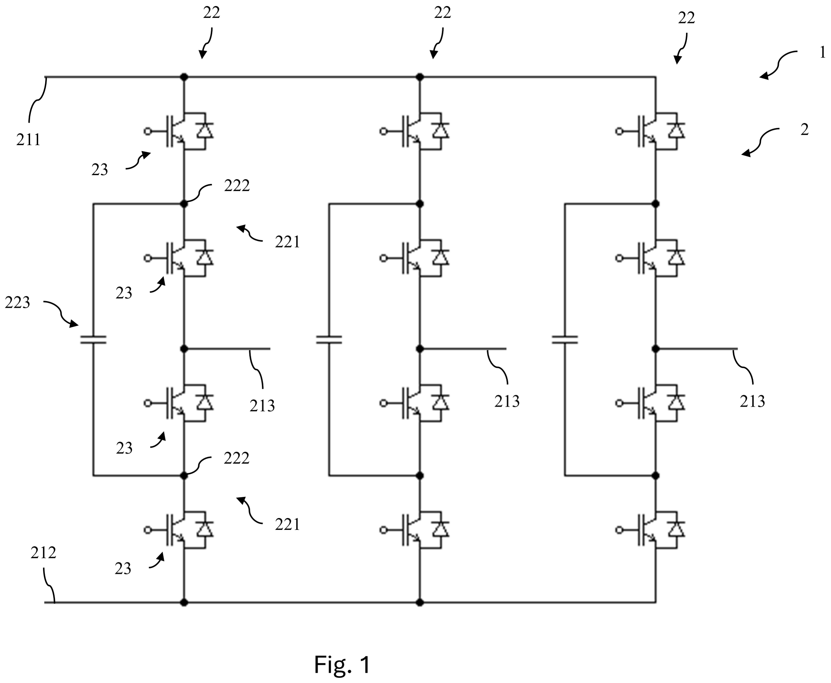

- Figure 1 schematically shows an electric conversion system according to one embodiment of the invention,
- Figure 2 schematically shows a phase module of a converter of the electric conversion system of Figure 1, together with the dedicated control system,
- Figure 3 shows time graphs of an example of circulating currents in switches and in the flying capacitor of a phase module, during a switching period,
- Figure 4 shows time graphs of two sets of theoretical modulating signals for the three phases, with assumptions of always maximum or always minimum saturations,
- Figure 5 shows a graph representing a phase coefficient, a phase current, and a circulating current in a flying capacitor, as a function of a reference phase duty cycle, in the case of a power factor equal to 1,
- Figure 6 shows time graphs of sinusoidal phase signals, phase currents and phase modulating signals, in the case of a power factor of 1,
- Figures 7 and 8 show time graphs corresponding to those of Figures 5 and 6, in the case of power factor equal to 0, and
- Figures 9 and 10 show time graphs corresponding to those of Figures 5 and 6, in the case of a power factor of 0.7.

### DETAILED DESCRIPTION

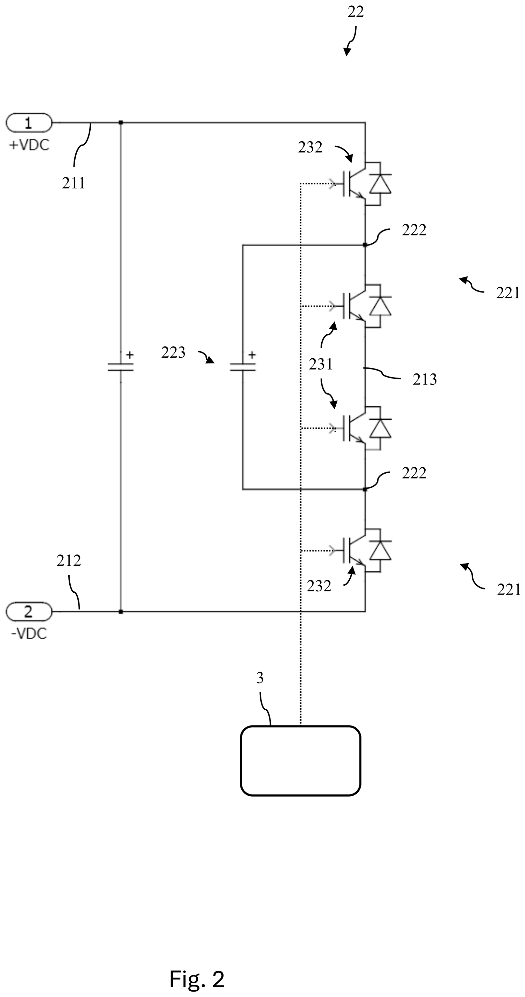

An electric conversion system, indicated as a whole by the number 1, comprises an electric converter 2 and a control system 3 (shown only in Figure 2 for a single phase) for controlling the operation of the converter 2.

The electric converter 2 comprises two input nodes 211, 212, which are a positive node 211 and a negative node 212. The input nodes 211, 212 can be connected to a DC bus. The DC bus in turn is preferably connected to a photovoltaic (PV) system (not illustrated) and/or to an electrical storage system (not illustrated), for example a battery energy storage system (BESS). The DC bus can optionally be connected to a bus capacitor, distinct from those that will be described below as flying capacitors.

The two input nodes 211, 212 are configured for operation with two voltages opposite each other, and equal in modulus to a reference voltage value V_{dc}. Thus, the overall voltage between the positive input node 211 and the negative input node 212 is twice the reference voltage 2V_{dc}. The DC bus may or may not be provided with a ground point, for example between two halves of the bus capacitor, at zero potential.

The electric converter 2 also comprises three output nodes 213, which can be connected to three respective alternating current phase conductors of a three-phase system. In the following, for simplicity, it will be assumed that the converter 2 exchanges with the three-phase system alternating currents of direct sequence, substantially sinusoidal and with constant amplitude. Therefore, the three currents will be out of phase with each other by 120°, over a predetermined fundamental period. However, it should be noted that the control system 3 that will be described can also be adapted without significant changes to the operation during current transients, in which the currents are not exactly sinusoidal, achieving substantially the same advantageous effects.

The converter 2 comprises three phase modules 22, one for each phase conductor of the three-phase system. All three phase modules 22 are connected to both input nodes 211, 212. Furthermore, each phase module 22 is connected to one and only one respective output node 213, distinct from the output nodes 213 connected to the other phase modules 22.

Each phase module 22 includes a plurality of controllable switches 23, which connect the input nodes 211, 212 and the output node 213 together. Controllable switches 23 are in particular transistors, configured to assume two conduction states which are an active state (or closed state), and an inactive state (or open state). Each switch 23 is configured to switch between the two conduction states as a function of an appropriate received control signal.

As is common in many converters 2, it is also intended that each switch 23 is provided with a circulation diode in parallel. In addition, each switch 23 that is described can actually be identified by several switches 23 in series with each other, which share the same current.

In the preferred embodiment, the converter 2 is a converter of the type referred to as a flycap converter. In such an embodiment, each phase module 22 comprises a pair of legs 221, each connected between the output node 213 connected to the phase module 22 and a respective separate input node 211, 212. There are thus provided a positive leg 221 between the output node 213 and the positive input node 211, and a negative leg 221 between the output node 213 and the negative input node 212.

Each leg 221 comprises two switches 23 in series with each other (although not necessarily sharing the same current, as will be clear below), connected to each other at an intermediate node 222. In particular, each leg 221 of each phase module 22 comprises an internal switch 231, connected between the output node 213 and the intermediate node 222, and an external switch 232, connected between the input node 211, 212 connected to the leg 221 (which may be the positive or negative input node 211, 212) and the intermediate node 222.

The phase module 22 then comprises a flying capacitor 223, connected to the controllable switches 23. In the preferred embodiment, the flying capacitor 223 is connected between the intermediate nodes 222 of the two legs 221. Preferably, the flying capacitor 223 is not connected to other nodes than the intermediate nodes 222, and therefore, all the current circulating in the flying capacitor 223 is always at the same time input and/or withdrawn from both intermediate nodes 222.

The flying capacitor 223 is configured to operate with a voltage equal to the reference voltage V_{dc}, i.e. half the voltage between the positive input node 211 and the negative input node 212. As will be clear from the following, the individual intermediate nodes 222 at the ends of the flying capacitor 223 may be at different times at different voltage levels, based on the conduction state of the different switches 23 of the phase module 22.

The main task of the control system 3 is to control the switches 23 of the converter 2 so that they assume, instant by instant, combinations of conduction states such as to result in predetermined voltages of the output nodes 213. In the preferred embodiment, the control system 3 is configured to control the switches 23 of each phase module 22 according to four combinations of states, so that the voltage of the relative output node 213 can assume three distinct levels.

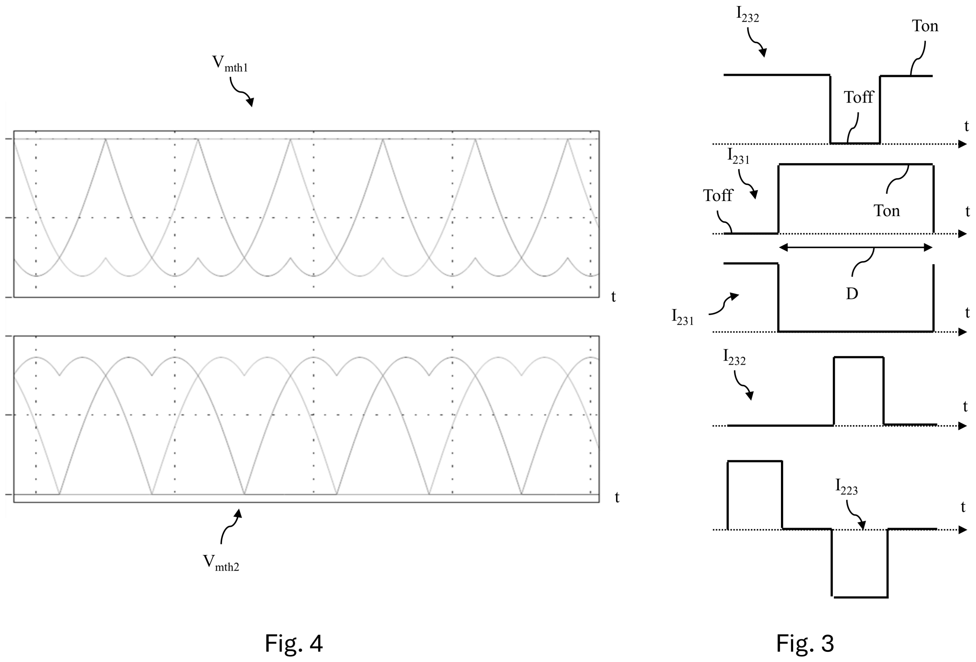

These states will be discussed with reference to Figure 3, in which the first four graphs represent currents circulating in the switches 23 of a phase module 22 during a switching period, or similarly the control logic signals of the switches 23, at a time when a positive but not maximum output phase voltage is to be obtained. The first four graphs of figure 3 in particular represent the current I₂₃₂ of the external switch 232 of the positive leg 221, the current I₂₃₁ of the internal switch 231 of the positive leg 221, the current I₂₃₁ of the internal switch 231 of the negative leg 221, and the current I₂₃₂ of the external switch 232 of the negative leg 221.

In a first state combination of the phase module, both switches 23 of the positive leg 221 are active, and both switches 23 of the negative leg are inactive. This combination is represented in figure 3 by those moments when periods of active state Ton of the first two graphs overlap. In the first combination of states, the voltage of the output node 213 of the phase module 22 is equal to the voltage of the positive input node 211, i.e. the reference voltage V_{dc}.

In a second state combination of the phase module, both switches 23 of the positive leg 221 are inactive, and both switches 23 of the negative leg are active. This combination is symmetrical to the previous one, and is not shown in figure 3, as it is desired to obtain a positive average voltage. In the second combination of states, the voltage of the output node 213 of the phase module 22 is equal to the voltage of the negative input node 212, i.e. the opposite of the reference voltage -V_{dc}.

In a third and fourth combination of states, an internal switch 231 and an external switch 232 of two distinct legs 221 are active (exclusively). For example, in the third combination, the inner switch 231 of the positive leg 221 and the outer switch 232 of the negative leg 221 (second and fourth graphs) are active, and in the fourth combination, the inner switch 231 of the negative leg 221 and the outer switch 232 of the positive leg 221 (first and third graphs) are active. In either combination, the remaining two switches 23 are inactive. In the third and fourth combination of states, the voltage of the output node 213 of the phase module 22 is zero, i.e. the difference in absolute value between the voltage of one of the input nodes 211, 212 and the voltage of the flying capacitor 223.

The fifth and last graph of figure 3 represents the circulating current, I₂₂₃ in the flying capacitor 223, and is the result of a combination of the first four graphs. Importantly, in the first and third combination of states, the circulating current I₂₂₃ in the flying capacitor 223 is zero. Thus, when the output phase voltage is equal to the reference voltage V_{dc} or its opposite -V_{dc}, the flying capacitor 223 is not subjected to any current.

Instead, in the third and fourth combination of states, the circulating current I₂₂₃ in the flying capacitor 223 is equal to the phase current I₂₁₃, positive or negative. Thus, when the output phase voltage is zero, the flying capacitor 223 is subjected to a stress proportional to the intensity of the phase current I₂₁₃ (which may also be a substantially zero stress if the zero voltage occurs at a time when the phase current I₂₁₃ is also zero).

In general, in a switching period, the average rms value of the circulating current I₂₂₃ in the flying capacitor 223 of the phase module 22 is given by the product of the phase current I₂₁₃ for a phase coefficient C, which depends on the alternation of the four combinations of states as detailed below.

In order to control the switches 23, the control system 3 is configured to generate and send sets of logical control signals to the switches 23 of the phase modules 22, such as to determine the switching of the switches 23 between open and closed states.

As already known for the PWM and DPWM controls, the sets of logical control signals are generated, for the phase modules 22, as a function of three respective phase modulating signals Vₘ, for example for comparison with respective carrier signals V_{c}.

As known, the carrier signals V_{c} are periodic signals (usually triangular or sawtooth-shaped) with a predetermined switching period. Instead, the modulating signals Vₘ are preferably periodic signals (e.g. sinusoidal) with a certain fundamental period, greater than the switching period.

Instead, the logical control signals, which have the same waveform as the currents of the first four graphs of figure 3, are signals with two discrete levels, wherein one of the levels determines the closed state of a switch 23 and the other level determines the open state.

As is well known, each switch 23 of a phase module 22 will remain in an active state and in an inactive state respectively for an active state period Ton and an inactive state period Toff, both within the switching period, as a function of the corresponding phase modulating signal Vₘ. For each switch 23, the time relationship between the active state period and the switching period is also referred to as the duty cycle.

The control system 3 is then configured to control the switches 23 of each phase module 22, by alternating different combinations of conduction states such that the respective output phase voltage results, in terms of average over a switching period, proportional to the intensity of the modulating signal Vₘ. The duty cycle of the switches 23 of the positive leg 221 (which share the same individual duty cycle between them) will also be referred to as the reference phase duty cycle D, while the duty cycle of the switches 23 in the negative leg 221 (also sharing the same individual duty cycle) is equal to the complement to one, i.e., 1-D, of the reference phase duty cycle D. It should be noted that the reference phase duty cycle D varies linearly with the phase output voltage, ranging from 0 at the minimum value to 1 at the maximum value.

In a preferred example, known per se, a single modulating signal Vₘ is used to generate the logical control signals for the different switches 23 of a same phase module 22. For the internal and external switches 231, 232 of one of the legs 221, for example the positive leg 221, the same modulating Vₘ is compared with two distinct carriers, for example offset from each other for a switching half period, or of opposite sign to each other. For the switches 23 of the other leg 221, it is not necessary to perform a new comparison between a carrier and a modulating signal Vₘ, but it is possible to use logical control signals complementary to those already generated for the first leg 221, in particular a pair of complementary logical control signals for the two external switches 232, and a pair of complementary logical control signals for the two internal switches 231, as can be recognized from the first four graphs in figure 3.

It should be noted that the modulating signal Vₘ is variable between an upper end value and a lower end value, corresponding respectively to the maintenance of the first and second combination of states for the entire switching period, and therefore to a maximum or minimum output phase voltage.

In fact, where the modulating signal Vₘ remains for a certain interval equal to the upper or lower end value (reference duty cycle D equal to 1 or equal to 0, i.e. a first and a second end duty cycle), in that interval there would be no intersections of the modulating signal Vₘ with the carrier V_{c}, also variable between the same end values, and therefore the switches 23 thus controlled would not be subject to switches.

On the other hand, when the modulating signal Vₘ is zero (reference duty cycle D equal to 0.5, i.e. a central duty cycle), only the third and fourth combination of states alternate, and the output phase voltage is constant and zero.

When the modulating signal Vₘ is in an intermediate condition between the zero value and one of the end values, the first combination of states is alternated with the third and fourth, for positive modulating signals (as in the graphs of figure 3), and the second combination of states is alternated with the third and fourth, for negative modulating signals. These alternations are based on times for which:
- the output phase voltage remains proportional to the modulating Vₘ, and
- the third and fourth combination of states are maintained for equivalent times between them, so as not to alter the state of charge of the flying capacitor 223.

From what has been commented, it can be seen that the third and fourth combination of states, i.e. those for which the stress on the flying capacitor 223 of the phase module 22 is maximum, are avoided when the duty cycle is equal to 0 or 1 (output phase voltage V_{dc} or -V_{dc}), and are permanently maintained (one alternating with the other) when the duty cycle is equal to 0.5 (output phase voltage equal to 0).

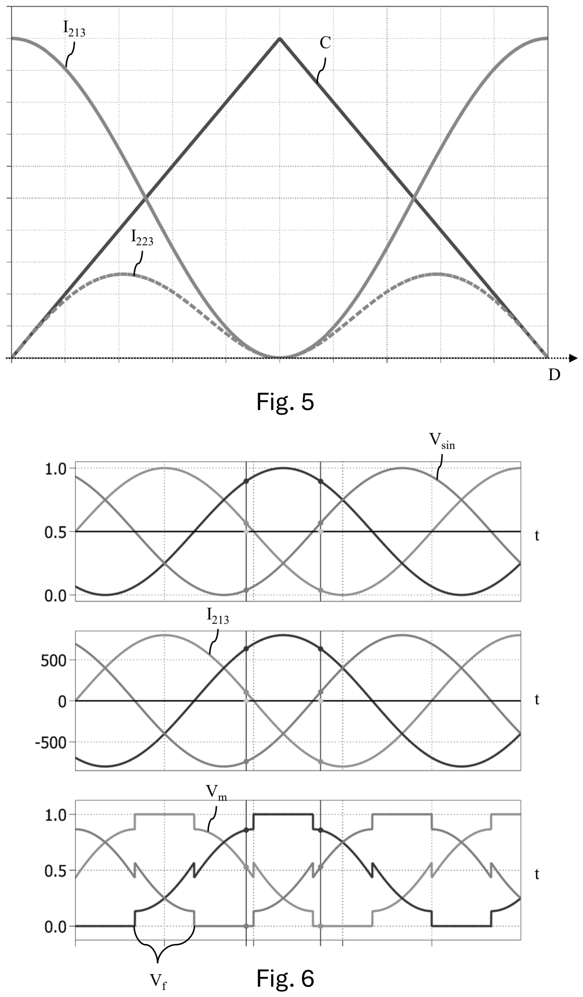

In the graphs of figures 5, 7 and 9, these issued are shown with reference to the aforementioned phase coefficient C, i.e. the ratio between the circulating current I₂₂₃ in the flying capacitor 223 of the relative phase module 22, in terms of rms value in a switching period, and the phase current I₂₁₃. The phase coefficient C substantially represents the circulation time of the phase current I₂₁₃ in the flying capacitor 223 within a commutation period, relative to the switching period. This phase coefficient C therefore also represents the stress condition of the flying capacitor 223, for a unitary phase current I₂₁₃.

The phase coefficient C is a predetermined function of the reference phase duty cycle D, or equivalently of the phase modulating signal. This function is maximum (equal to 1) for a reference phase duty cycle D equal to 0.5, and therefore corresponding to a phase modulating signal and a zero output phase voltage, and is minimum (equal to 0), for a reference phase duty cycle D equal to 0 or 1, and therefore corresponding to a maximum or minimum modulating signal and output phase voltage.

For intermediate values of the duty cycle and/or of the phase modulating signal and/or of the output phase voltage, the phase coefficient C varies linearly between the three points indicated, thus increasing the closer to the reference duty cycle D of 0.5.

The control system 3 is configured to generate the three phase modulating signals Vₘ by a DPWM technique. Specifically, the starting point for generating the three phase modulating signals Vₘ consists of three sinusoidal phase signals Vₛᵢₙ, phase-shifted by 120° with respect to each other, with periodicity equal to the fundamental period, and equal amplitude. The three sinusoidal signals Vₛᵢₙ, shown in Figures 6, 8, and 10, are then distinguished by the three phases. These sinusoidal Vₛᵢₙ signals are those that could have been used as modulating waveforms if a DPWM technique had not been used.

Each phase modulating signal Vₘ is obtained by adding, to the respective V-phase sinusoidal signal ₛᵢₙ, a particular homopolar signal. The homopolar signal is common to the three phase modules 22. Therefore, the difference between the phase modulating signals Vₘ and the sinusoidal phase signals Vₛᵢₙ is equal, at each instant, for all the phase modules 22. Also, the positive-sequence component of the three phase modulating signals Vₘ corresponds to the three sinusoidal phase signals Vₛᵢₙ.

Three examples of phase modulating signals Vₘ are shown in figures 6, 8, 9 for three different phase shifts between the sinusoidal signals Vₛᵢₙ and the phase currents I₂₁₃, in particular for power factors equal to 1, 0 and 0.7. In these three cases, therefore, even with the same sinusoidal signals Vₛᵢₙ, there will be different time-shapes of the homopolar signal.

As known, the homopolar component of the voltage cannot generate currents in a three-phase system, and therefore the introduction of the homopolar signal into the phase modulating signals Vₘ does not alter the phase currents I₂₁₃ with respect to those that would have been obtained using the phase sinusoidal signals Vₛᵢₙ as modulating signals.

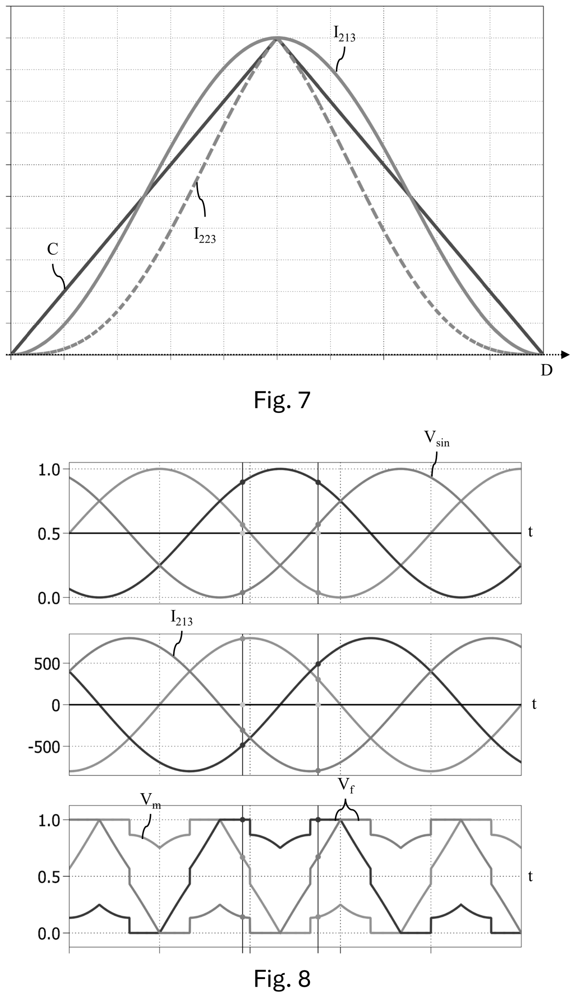

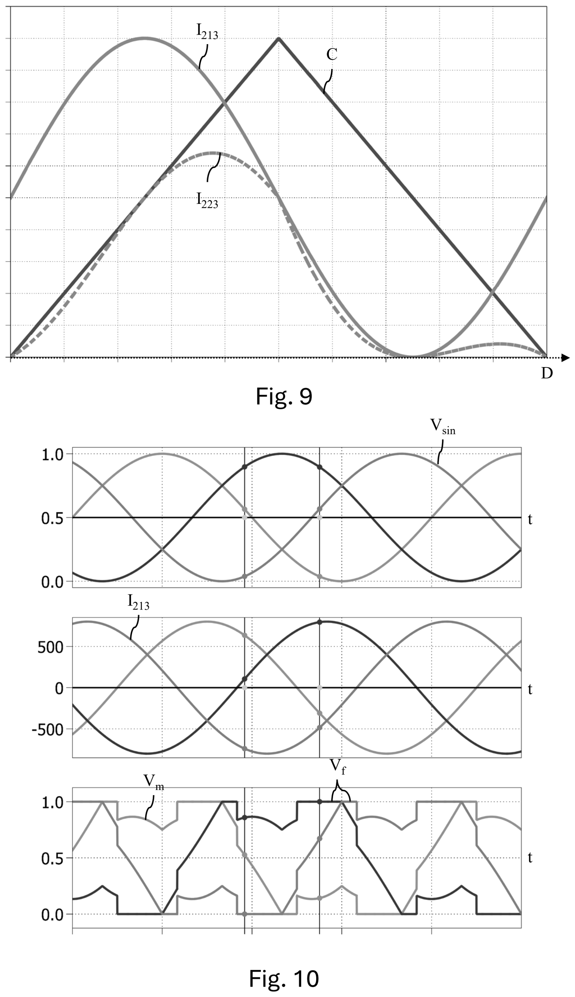

The homopolar signal has a generally different time-shapes for different intervals of a sequence of intervals of the fundamental period, generally at least six distinct intervals (or in some cases multiples of six, for example twelve intervals in Figures 8 and 10). In particular, in each interval of the sequence, the homopolar signal is generated so that an optimal V_{f} among the three saturated Vₘ phase modulating signals, saturates, that is, it becomes a flattened modulating signal with a constant value throughout the entire interval. This constant value can be equal to the upper end value or the lower end value, that is, one of those values for which no switches take place during the interval.

Within the interval, therefore, the homopolar signal is not constant, but is equal to the difference between a constant value and a sinusoidal signal Vₛᵢₙ. This homopolar signal, within the interval, is also added to the sinusoidal signals Vₛᵢₙ of the other two phases, whose corresponding phase modulating signals Vₘ do not saturate. Therefore, in each interval all three modulating signals Vₘ are translated with respect to the corresponding phase sinusoidal signals Vₛᵢₙ.

In each interval, the optimal flattened modulating signal V_{f},. i.e., the phase modulating signal Vₘ brought to saturation, is selected from the three phase modulating signals Vₘ according to criteria that will be explained in greater detail in the following. In particular, for each interval, alternative selections of candidate flattened modulating signals are considered among the three Vₘ phase modulating signals.

It is emphasized that in each interval one of the three flattened modulating signal candidates must always be discarded. This is in particular the candidate flattened modulating signal corresponding to the phase sinusoidal signal Vₛᵢₙ that, during the interval, lies between the other two phase sinusoidal signals Vₛᵢₙ. In fact, if that particular phase were saturated, one of the other phases would have a phase modulating signal Vₘ exceeding either the upper or lower end value.

For the only phase where the end value is exceeded, even if achievable by the electronics of the control system 3, the output phase voltage would no longer be proportional to the phase modulating signal Vₘ, and therefore the forward sequence component of the output phase voltages would be altered, and an unacceptable reverse sequence voltage would be introduced.

Therefore, the only possible choices for the optimal flattened modulating signal V_{f} during the interval are the one corresponding to the maximum phase sinusoidal signal Vₛᵢₙ (saturated at the upper end value), or the one corresponding to the minimum phase sinusoidal signal Vₛᵢₙ (saturated at the lower end value).

In other words, in each interval one must choose whether to proceed to a saturation at the upper end value or a saturation at the lower end value (in both cases bringing to saturation the only phase that during the interval can be brought to the saturation of interest). Figure 4 illustrates this choice by showing a first set of theoretical modulating signals Vₘₜₕ₁ for the three phases, assuming that saturation is always chosen at the upper end value, and a second set of theoretical modulating signals Vₘₜₕ₂ for the three phases, assuming that saturation is always chosen at the lower end value. In each interval, the three phase modulating signals Vₘ will correspond to either the first or the second set of theoretical modulating signals, Vₘₜₕ₁, Vₘₜₕ₂.

Among these flattened modulating signal candidates, the optimal choice lies in the one that minimizes, in the considered interval, a combination of the circulating currents I₂₂₃ in the flying capacitors 223 of the three phase modules 22, preferably given by the sum of their squares, or equivalently of their rms values. The choice of the optimal flattened modulating signal V_{f} therefore allows to calculate the homopolar signal necessary for saturation, and the instantaneous values of all the three phase modulating signals Vₘ.

Preferably, to select the optimal flattened modulating signal V_{f}, the circulating currents I₂₂₃ in the flying capacitors 223 of the three phase modules 22 are calculated during the interval for each of the possible alternative candidate flattened modulating signals.

In particular, to calculate the circulating currents I₂₂₃ in the interval with the different possible alternative selections, the control system 3 determines, for each alternative selection, the reference phase duty cycles D of all the three phases. The circulating current I₂₂₃ in the flying capacitor 223 of each phase module 22 is then calculated, for each phase, as a function of the phase current I₂₁₃ and the respective reference phase duty cycle D. More in detail, the phase coefficient C is determined according to the aforementioned predetermined function of the reference phase duty cycle D, and the circulating current I₂₂₃ of the phase module 22 is determined by multiplying the phase coefficient C by the phase current I₂₁₃. This product is displayed graphically in figures 5, 7 and 9.

In this way, for each possible alternative selection of the flattened modulating signal candidate, the circulating currents I₂₂₃ in the three flying capacitors 223 of the phase modules 22 are obtained.

Preferably, as anticipated, minimizing the combination of the circulating currents I₂₂₃ in the flying capacitors 223 of the three phase modules 22 consists in selecting as the optimal flattened modulating signal V_{f} the candidate flattened modulating signal for which the sum of the squares, or rms values, of these circulating currents I₂₂₃ is minimal.

With this control strategy, in each interval of the sequence, the switches 23 of the phase module 22 associated with the optimal flattened modulating signal V_{f} remain in their respective active or inactive state throughout the entire interval, and the circulating current I₂₂₃ in the flying capacitor 223 of the phase module 22 associated with the optimal flattened modulating signal V_{f} remains zero throughout the entire interval.

However, it should be noted that the most positive impact of the proposed control is usually not on the phase for which the optimal flattened modulating signal V_{f} is obtained, but on the phase for which the intermediate phase modulating signal Vₘ (or equivalently the sinusoidal signal of phase Vₛᵢₙ) is obtained. In fact, this phase is the one for which the phase coefficient C is maximum. Therefore, in many cases (as can be recognized from figures 7 and 9) the circulating current I₂₂₃ is also high, i.e. the product between the phase coefficient C and the phase current I₂₁₃. Therefore, moving the modulating signal of this phase towards an appropriate end, while not reaching saturation, significantly reduces its phase coefficient C and its circulating current I₂₂₃.

In other cases (as in figure 5), the phase with the intermediate modulating may not be the most critical because, despite the high C-phase coefficient value, the phase current I₂₁₃ may be low for that phase.

Note that, among the three phase modules 22, there could also be one that is negatively affected, as it is neither the phase with intermediate modulating signal, nor the phase with the modulating signal brought to saturation. This phase is generally brought towards phase coefficients closer to 1.

However, since the selection falls on the optimal flattened modulating signal V_{f} that minimizes the sum of the rms values of the circulated currents for the three phases, and considering that in a fundamental period there are several intervals, and in some of these intervals the current situations of the phases are substantially the same, from the point of view of different phases, over the entire fundamental period, the average stress of each of the flying capacitors 223 is reduced, and it is possible to reduce their sizing.

As already mentioned, within a fundamental period, the sequence of intervals generally includes at least six intervals. In fact, the situation that is proposed in a certain interval for one phase, which is positively saturated, is repeated correspondingly in other intervals for the other two phases, and also is repeated correspondingly in another interval with negative saturation. Therefore, generally the duration of these intervals is no more than 60° of the fundamental period.

In some embodiments, therefore, intervals with a fixed duration of 60° can simply be adopted, optionally with predetermined interval ends. The duration therefore does not change despite possible changes in intensity and phase of the phase currents I₂₁₃.

However, in the preferred embodiment, the duration of each interval is not fixed a priori, nor are its ends or the number of intervals. Instead, the control system 3 is configured to determine the end of a current interval of the sequence, and the start of a new interval, by switching from the current optimal flattened modulating signal V_{f} to a new optimal flattened modulating signal V_{f} when it determines that the circulating currents I₂₂₃ in the flying capacitors 223 of the three phase modules 22 are lower for the new optimal flattened modulating signal V_{f} than for the current optimal flattened modulating signal V_{f}, preferably lower by at least a predefined delta value.

More in detail, the control system 3 can be configured to repetitively screen the possible alternative selections of the candidate flattened modulating signals, with a frequency given by a calculation time less than the fundamental period, and generally less than each interval, for example equal to the switching period. Each interval of the sequence is then identified by a series of consecutive calculation times in which the selection of the optimal flattened modulating signal V_{f} remains the same, and ends when the calculation results in a different optimal flattened modulating signal V_{f}.

The optional introduction of the aforementioned delta value avoids the risk of too frequent changes in the optimal flattened modulating signal V_{f}, introducing a hysteresis function in the control.

From the graphs of figures 6, 8 and 10 it is recognised that the control results in intervals that are sometimes aligned to the current and/or voltage peaks of the related phases, and sometimes are not, depending on the power factor. In addition, it is recognized that the intervals may be six, with duration corresponding to 60° each, but may also be more numerous, and have durations generally different from each other. For example, the maximum saturation intervals of each phase, when added together within a fundamental period, may cumulatively reach 60°, and the same applies to the minimum saturation intervals.

It is clear that a person skilled in the art will be able to make numerous equivalent modifications to the variants set forth above, without thereby departing from the scope of protection as defined by the appended claims.

## Claims

1. Electric conversion system (1), comprising:
- an electric converter (2), comprising:
- two input nodes (211, 212) connectable to a direct current DC bus,
- three output nodes (213) connectable to three respective alternating current phase conductors of a three-phase system (1), and
- three phase modules (22), each connected to the two input nodes (211, 212) and to a single, respective output node (213), wherein each phase module (22) comprises a plurality of controllable switches (23) and a flying capacitor (223), connected to the controllable switches (23), and
- a control system (3) configured to generate and send sets of logical control signals to the switches (23) of the phase modules (22), such as to cause the switching of the switches (23) between open and closed states, according to three respective phase modulating signals (Vₘ),
wherein the control system (3) is configured to:
- generate the three phase modulating signals (Vₘ) using a DPWM (discontinuous pulse width modulation) technique, adding, to three sinusoidal phase signals (Vₛᵢₙ) having a fundamental period, a homopolar signal that is common for the three phase modules (22),
- generate the homopolar signal so that, for a sequence of intervals within the fundamental period, in each interval an optimal flattened modulating signal (V_{f}), selected from among the three phase modulating signals (Vₘ), assumes a constant value equal to a higher or lower end value,
**characterised in that** the control system (3) is configured to:
- select the optimal flattened modulating signal (V_{f}), for each interval of said sequence, among the three phase modulating signals (Vₘ), so as to minimize, in the interval, a predetermined combination of circulating currents (I₂₂₃) in the flying capacitors (223) of the three phase modules (22),
wherein the predetermined combination of circulating currents (I₂₂₃) in the flying capacitors (223) of the three phase modules (22) is a sum of squares or rms values of the circulating currents (I₂₂₃),
wherein, for each interval, the control system (3) is configured, in selecting the optimal flattened modulating signal (V_{f}), to:
- calculate circulating currents (I₂₂₃) in the flying capacitors (223) of the three phase modules (22) during the interval, with a plurality of alternative selections of flattened modulating signal candidates,
- calculate for the interval the predetermined combination of circulating currents (I₂₂₃) in the flying capacitors (223) of the three phase modules (22), and
- select, as the optimal flattened modulating signal (V_{f}), the one among the flattened modulating signal candidates for which the predetermined combination calculated for the interval is minimal.

2. System (1) according to claim 1, wherein the control system (3) is configured, when calculating circulating currents (I₂₂₃) in the flying capacitors (223), for each flattened modulating signal candidate, to:
- determine a reference phase duty cycle (D) for each phase, relative to the interval and to the flattened modulating signal candidate, and
- calculate, for each phase module (22), the circulating current (I₂₂₃) in the flying capacitor (223), as a function of a phase current (I₂₁₃) and the respective reference phase duty cycle (D).

3. System (1) according to claim 2, wherein calculating, for each phase module (22), the circulating current (I₂₂₃) in the flying capacitor (223), comprises:
- determining a phase coefficient (C) according to a predetermined function of the reference phase duty cycle (D), preferably the predetermined function being maximum for a reference phase duty cycle (D) corresponding to a zero output phase voltage, in particular a reference phase duty cycle (D) equal to 0.5, and
- determining the circulating current (I₂₂₃) of the phase module (22) by multiplying the phase coefficient (C) by the phase current (I₂₁₃).

4. System (1) according to claim 2 or 3, wherein each phase module (22) is configured to generate a maximum output phase voltage for a first end reference phase duty cycle (D), preferably equal to 1, a minimum output phase voltage for a second end reference phase duty cycle (D), preferably equal to 0, and to generate a zero output phase voltage for a central reference phase duty cycle (D), preferably equal to 0.5.

5. System (1) according to any one of claims 1 to 4, wherein:
- each phase module (22) comprises a pair of legs (221), each connected between the output node (213) of the phase module (22) and a respective separate input node (211, 212), each leg (221) comprising two controllable switches (23) in series with each other, connected to each other at an intermediate node (222), and
- for each phase module (22), the flying capacitor (223) is connected between the intermediate nodes (222) of the two legs (221).

6. System (1) according to claim 5, wherein:
- each leg (221) of each phase module (22) comprises an internal switch (231), connected to the respective output node (213), and an external switch (232), connected to the respective input node (211, 212),
- for each phase module (22), the sets of logical control signals include separate signals for all the switches (23) of the two legs (221), including active state periods and inactive state periods,
- the active state periods of each external switch (232) overlap with active state periods of the internal switches (231) of the two legs (221), so that the flying capacitor (223) is subject to a circulating current (I₂₂₃) when an internal switch (231) and an external switch (232) of two distinct legs (221) are in an active state period at the same time.

7. System (1) according to any one of claims 1 to 6, wherein, in each interval of said sequence, the switches (23) of the phase module (22) associated with the optimal flattened modulating signal (V_{f}) each remain in their own active or inactive state for the entire duration of the interval, and the circulating current (I₂₂₃) in the flying capacitor (223) of the phase module (22) associated with the optimal flattened modulating signal (V_{f}) is zero for the entire duration of the interval.

8. System (1) according to any one of claims 1 to 7, wherein the control system (3) is configured to determine the conclusion of a current interval of the sequence, and the start of a new interval, with a transition from an actual optimal flattened modulating signal (V_{f}) to a new optimal flattened modulating signal (V_{f}), when it determines that the circulating currents (I₂₂₃) in the flying capacitors (223) of the three phase modules (22) are less for the new optimal flattened modulating signal (V_{f}) than for the actual optimal modulating signal (V_{f}).
